# EUROPÄISCHE PATENTSCHRIFT

(11) **EP 1 232 371 B1**
(45) Veröffentlichungstag und Bekanntmachung des Hinweises auf die Patenterteilung: **10.11.2004**
(21) Anmeldenummer: 00958475.6
(22) Anmeldetag: 19.08.2000
(51) Int. Cl.: F26B 25/02, F26B 15/12, B65G 23/36

(54) **ROLLENBAHNTROCKNER**
ROLLER BELT DRIER
SECHOIR DOTE D'UN TRANSPORTEUR A ROULEAUX

(30) Priorität: 17.11.1999 DE 19955147
(43) Veröffentlichungstag der Anmeldung: 21.08.2002
(73) Patentinhaber: Grenzebach BSH GmbH, 36251 Bad Hersfeld (DE)
(72) Erfinder: SCHMIDT, Manfred, 36280 Oberaula-Olberode (DE); LEHN, Gerhard, 36251 Ludwigsau-Friedlos (DE); SCHNEIDER, Bernd, 36251 Bad Hersfeld (DE)
(74) Vertreter: Frese-Göddeke, Beate, Dr.
(86) Internationale Anmeldenummer: PCT/EP2000/008115
(87) Internationale Veröffentlichungsnummer: WO 2001/036890

(56) Entgegenhaltungen:
- DE-A- 2 117 303
- DE-C- 4 326 877
- GB-A- 191 316 712
- US-A- 4 564 380
- US-A- 4 601 743

## Beschreibung

Die Erfindung betrifft einen Trockner gemäß dem Oberbegriff des Anspruchs 1.

Derartige Trockner werden zur Trocknung von plattenförmigem Gut, insbesondere von Gipsplatten eingesetzt. Ein gattungsgemäßer Trockner ist in der DE 43 26 877 C beschrieben. Er weist mehrere Fördervorrichtungen mit übereinander angeordneten Rollenbahnen auf, vorzugsweise in 6 bis 14 Etagen. Die Rollen jeweils einer Rollenbahn sind über eine endlose Kette und einen Motor antreibbar. Die Kette kann aber auch so geführt sein, daß jeweils zwei Rollenbahnen über eine Kette mit zugehörigem Motor angetrieben sind. Der Motor ist an einem Ende des Trockners, während am entgegengesetzten Ende ein Umlenk- und Spannsystem für die Kette angeordnet ist.

Das Gut wird über eine Zuführvorrichtung auf die verschiedenen Etagen verteilt, wobei im Trockner in dichter Folge aneinandergereiht abhängig von der nutzbaren Breite der Rollenbahn im Verhältnis zur Plattenbreite mehrere Platten nebeneinander angeordnet sind. Das Gut wird so längs einer Bahn durch den Trockner transportiert. Hierbei werden die Oberflächen der Platten mit Trocknungsmedium beaufschlagt.

Ein Trockner ist baukastenartig aus mehreren Feldern aufgebaut. Die Anzahl der Felder richtet sich nach der erforderlichen Trocknungsleistung und beträgt 5 bis 80 Felder. Allerdings ist die Kapazität eines Trockners dadurch begrenzt, daß mit zunehmender Trocknerlänge die durch die Kette zu übertragenden Zugkräfte wachsen. Eine Kette kann aber nicht beliebig stark ausgebildet werden, weil die für die Kettenspannung erforderlichen Kräfte bei hohem Eigengewicht der Kette nur schwer abzufangen sind. Weiterhin erfordert eine schwere Kette mehr Platz und ist teurer. Ab einer bestimmten Trocknerlänge sind geeignete Ketten nicht verfügbar.

Der Anmelderin ist ein anderes Antriebssystem bekannt, bei dem für jede bzw. für je zwei Rollenbahnen zwei Antriebe vorgesehen sind. Hierbei ist die Kette ungefähr in der Mitte des Trockners geteilt, das heißt, es sind zwei anstatt einer Kette für eine bzw. zwei Bahnen angeordnet, wobei jeder Kette ein Antrieb, der in der Mitte des Trockners angeordnet ist, und eine Spannvorrichtung zugeordnet ist. Diese Ausführungsart hat den Nachteil, daß das Antriebssystem aufwendig ist, weil die zugehörigen Vorrichtungen doppelt installiert sein müssen. Weiterhin ist die mittige Anordnung der Antriebe schwierig abzudichten.

Aufgabe der Erfindung ist es, einen Trockner der gattungsbildenden Art zu schaffen, der große Kapazitäten erlaubt, wobei ein Antriebssystem mit geringem baulichen Aufwand eingesetzt ist und hohe Umgebungstemperaturen am Antrieb sowie Probleme der Dichtheit des Trockners vermieden werden.

Die Aufgabe ist durch die Merkmale des Anspruchs 1 gelöst. Da für jede Kette sowohl im Eintragsbereich als auch im Austragsbereich des Trockners je ein Antrieb angeordnet ist, ist die maximale Zugkraft, die im Betrieb von einer Kette aufgenommen werden muß, in etwa halbiert. Hierdurch kann entweder die Kette schwächer ausgelegt oder bei gleicher Kettenstärke die Trocknerlänge und damit die Trock-nungskapazität entsprechend vergrößert werden, ohne daß das Antriebssystem insgesamt aufwendiger zu konstruieren ist. Antriebe und Spannsysteme können außerhalb jeweils vor und hinter dem Trockner angeordnet sein, so daß seine Dichtheit gewährleistet ist und nur die Umgebungstemperatur einwirkt.

Die abhängigen Ansprüche betreffen vorteilhafte Ausbildungen der Erfindung.

Das Antreiben von zwei Rollenbahnen mit einer Kette nach Anspruch 2 vermindert den baulichen Aufwand.

Ansprüche 3 und 4 betreffen vorteilhafte Anordnungen einer Spannvorrichtung und ggf. eines Antriebes.

Die Lagerung einer Spannvorrichtung in einer Rollenumlaufeinheit nach Anspruch 5 gewährleistet die verhakungsfreie Beweglichkeit in Längsrichtung bei einer sicheren Aufnahme aller auftretenden Kräfte.

Dadurch daß nach Anspruch 6 zwei Rollenumlaufeinheiten parallel eingesetzt sind, können die einzelnen Einheiten kleiner dimensioniert sein, was sich besonders positiv in einer geringen Bauhöhe auswirkt.

Die hängende Lagerung der Spannvorrichtung nach Anspruch 7 vermindert die Verschmutzung und damit den Wartungsaufwand.

Ein Beispiel der Erfindung wird anhand von schematischen Zeichnungen näher erläutert.
Figur 1 zeigt einen Trockner von der Antriebsseite.
In Figur 2 ist ein Schnitt durch den Trockner gemäß Figur 1 dargestellt.
Figur 3 zeigt ein Feld des Trockners von der Antriebsseite.
Figur 4 zeigt die Lagerung einer Rolle als Detail.
Figur 5 zeigt ein Gestell für einen eintragseitigen Antrieb senkrecht von oben.
Figur 6 zeigt eine Spannvorrichtung von der Seite bei abgenommenem Antrieb.
Figur 7 zeigt die Spannvorrichtung gemäß Figur 6, aber mit Antrieb, senkrecht von unten, teilweise geschnitten.
Figur 8 zeigt ein System Schienen - Schlitten als Detail.

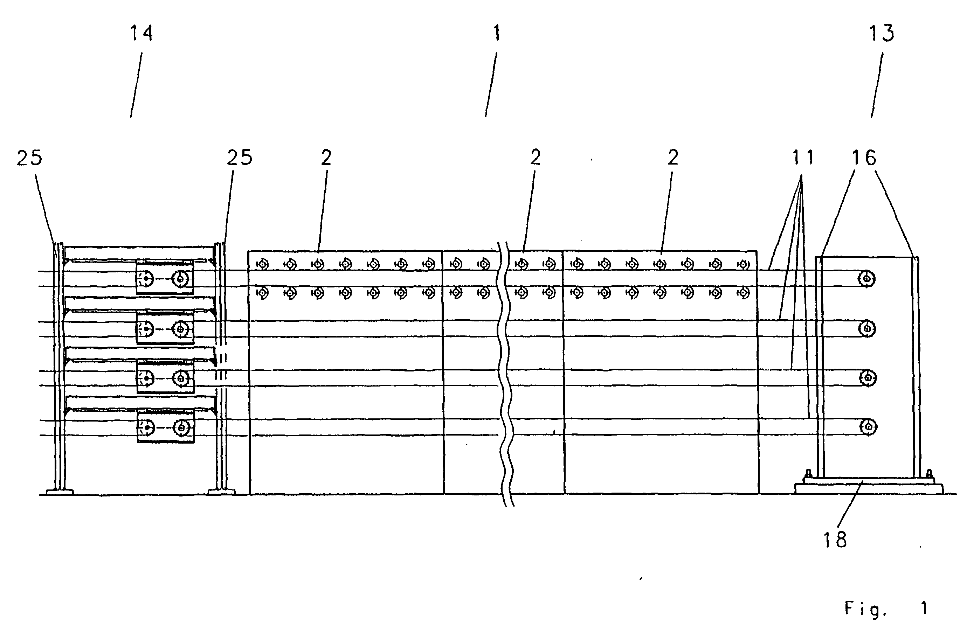

Wie aus Figuren 1 ersichtlich ist ein Trockner 1 aus einer Vielzahl von Feldern 2 aufgebaut. Für den Antransport von Platten zum Trockner 1 und die Verteilung auf die einzelnen Etagen ist eine nicht dargestellte Zuführvorrichtung angeordnet, für den Abtransport eine nicht dargestellte Austragsvorrichtung, die z.B. als Rollenbahnförderer oder als Bandförderer ausgebildet sind.

Für jedes Feld 2 sind bei querbelüfteten Trocknern 1 nicht dargestellte Vorrichtungen zum Beblasen mit und zum Absaugen von Trocknungsmedium angeordnet. Bei längsbelüfteten Trocknern 1 sind diese Vorrichtungen in jeweils mindestens einem Einblasfeld und Absaugfeld angeordnet, während die übrigen Felder 2 längs vom Trocknungsmedium durchströmt sind.

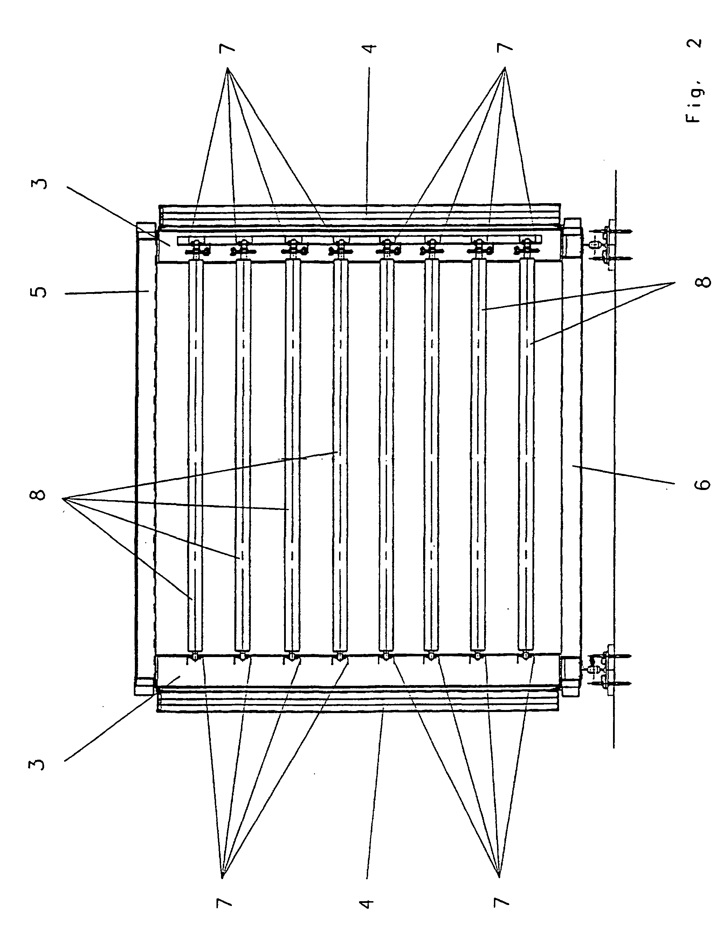

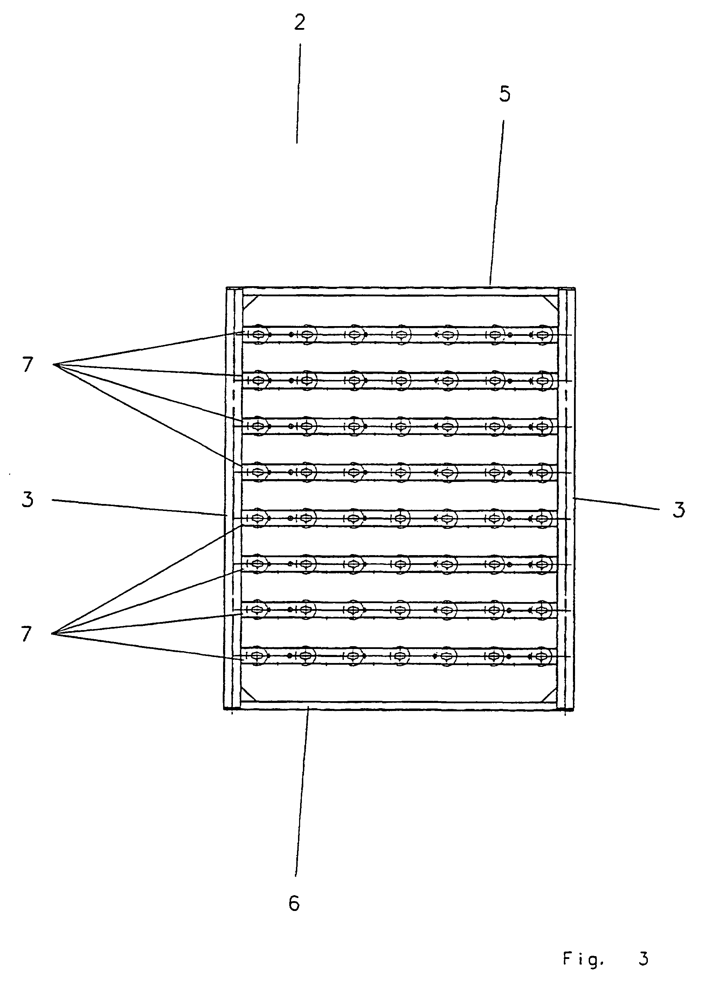

Ein Feld 2 hat einen rechteckigen Grundriß und ist anhand der Figuren 2 und 3 näher beschrieben. An den Ecken ist jeweils eine Stütze 3 angeordnet. Jedes Feld weist zwei Seitenwände 4, eine Decke 5 und einen Boden 6 auf, die jeweils an den Stützen 3 befestigt sind. Die Seitenwände 4, Decken 5 und Böden 6 sind doppelwandig mit dazwischen liegender Isolierschicht ausgeführt. Auf jeder Seite des Trockners 1 erstrecken sich jeweils zwischen zwei Stützen 3 horizontale, übereinander angeordnete und an den Stützen 3 befestigte Rollenträger 7 entsprechend der Anzahl der Etagen des Trockners 1. Zwischen zwei auf beiden Seiten und in einer Höhe befindlichen Rollenträgern 7 erstrecken sich quer zur Förderrichtung horizontale, hintereinander angeordnete walzenförmige Rollen 8 einer Rollenbahn. Jede der übereinander angeordneten Rollenbahnen bildet den Boden der Etagen, in denen die Platten gefördert werden; sie werden auch als Rollenbahnförderer bezeichnet.

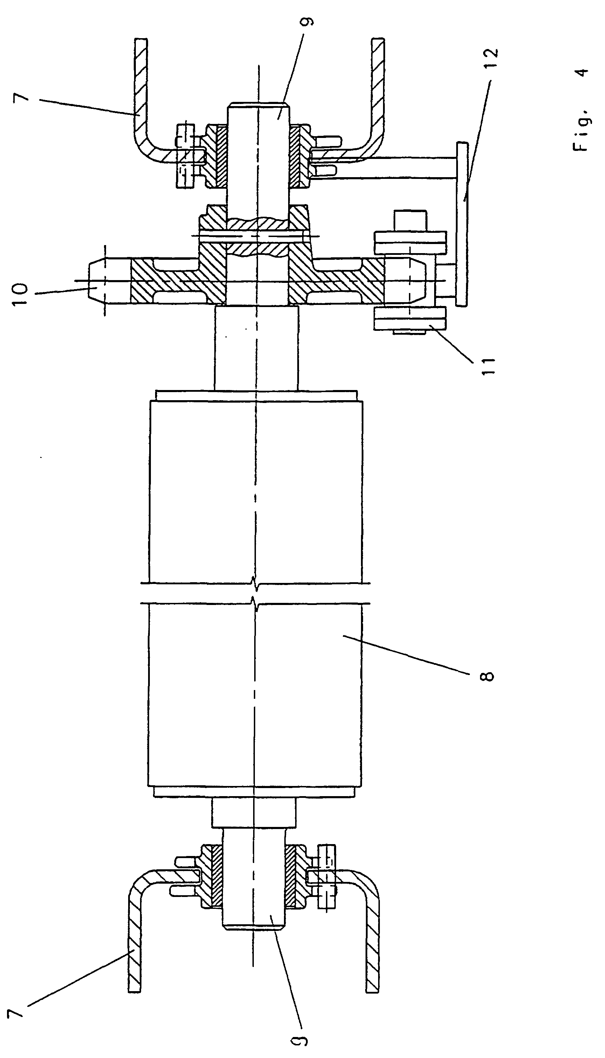

Wie aus Figur 4 ersichtlich sind die Rollen 8 an ihren Enden mit Zapfen 9 versehen, die in den Rollenträgern 7 drehbar gelagert sind. Auf der Antriebsseite befindet sich vor den Rollenträgern 7 auf den Zapfen 9 je ein Kettenrad 10. Über diese Kettenräder 10 ist eine endlose Kette 11 derart geführt, daß sie gleichzeitig die Rollen 8 von zwei unmittelbar übereinander angeordneten Etagen antreibt. Hierfür ist die Kette 11 in der unteren Etage oberhalb der zugehörigen Kettenräder 10 und in der oberen Etage unterhalb der zugehörigen Kettenräder 10 geführt, wobei hier die Kette 11 z.B. mit einem Blech 12 und darauf fixierter Führungsschiene abgestützt ist.

Die Ketten 11 erstrecken sich über die gesamte Länge des Trockners 1 und darüber hinaus jeweils bis in ein Gestell 13, 14.

Das Gestell 13 ist in Transportrichtung gesehen hinter dem Trockner 1 angeordnet, und dient der Aufnahme der Antriebe 15. Das Gestell 13 befindet sich auf der Antriebsseite seitlich neben dem Anfang der Austragsvorrichtung.

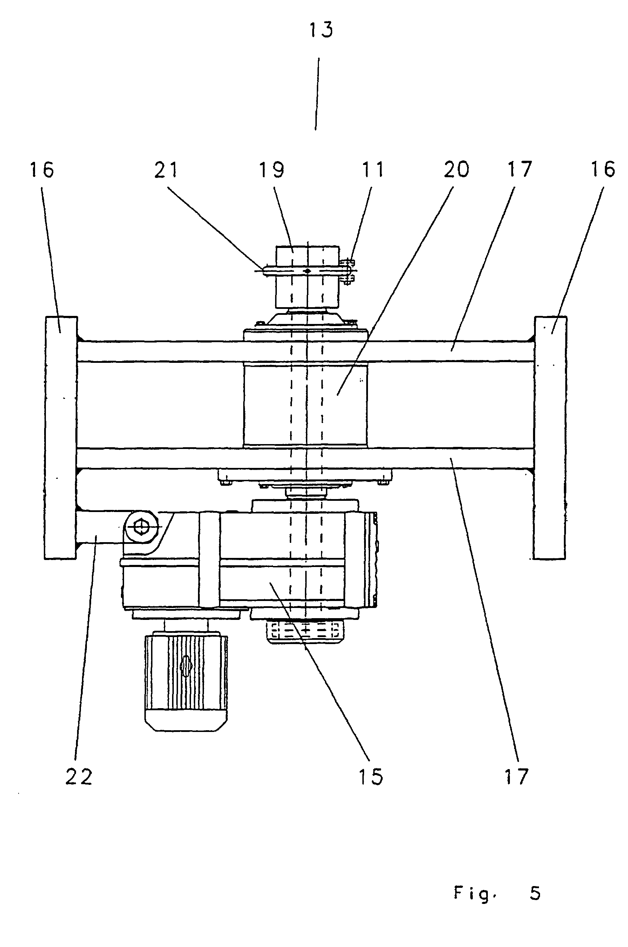

Ein Antrieb 15 auf der Austragseite des Trockners 1 ist in Figur 5 dargestellt. Das Gestell 13 besteht aus vier rechteckig- länglichen dicken Blechen 16, 17, die kastenartig zusammengeschweißt sind, und aus einer am unteren Ende festvebundenen Bodenplatte 18. Zwei Bleche 16 sind voneinander beabstandet rechtwinklig zur Transportrichtung angeordnet. Zwischen den beiden Blechen 16 sind die beiden Bleche 17 so befestigt, daß alle vier ein Rechteck bilden, wobei die Bleche 16 über die Ecken des Rechtecks hinausragen können.

In den Blechen 17 sind - jeweils in der Höhe zwischen zwei Etagen - runde Aussparungen für die Aufnahme einer Antriebswelle 19 in einem zugehörigen Lagergehäuse 20. Das Lagergehäuse 20 ist mit geringem Spiel in die Aussparung eingesetzt und von außen z.B. mit Schrauben am vom Trockner 1 weg weisenden Blech 17 befestigt. An dem Ende der Antriebswelle 19, das zum Rollenbahnförderer weist, ist vertikal fluchtend mit den Kettenrädern 10, ein Kettenrad 21 zum Antrieb der Kette 11 befestigt. Die Kette 11 ist so auf dem Kettenrad 21 geführt, daß sie um 180° umgelenkt ist An dem anderen Ende der Antriebswelle 19 ist ein Antrieb 15, z.B. ein Getriebemotor, angeordnet. Der Antrieb 15 ist gegen Verdrehen um die Antriebswelle 19 gesichert, z.B. durch Verschrauben an einer Drehmomentenstütze 22, die am Blech 16 befestigt ist.

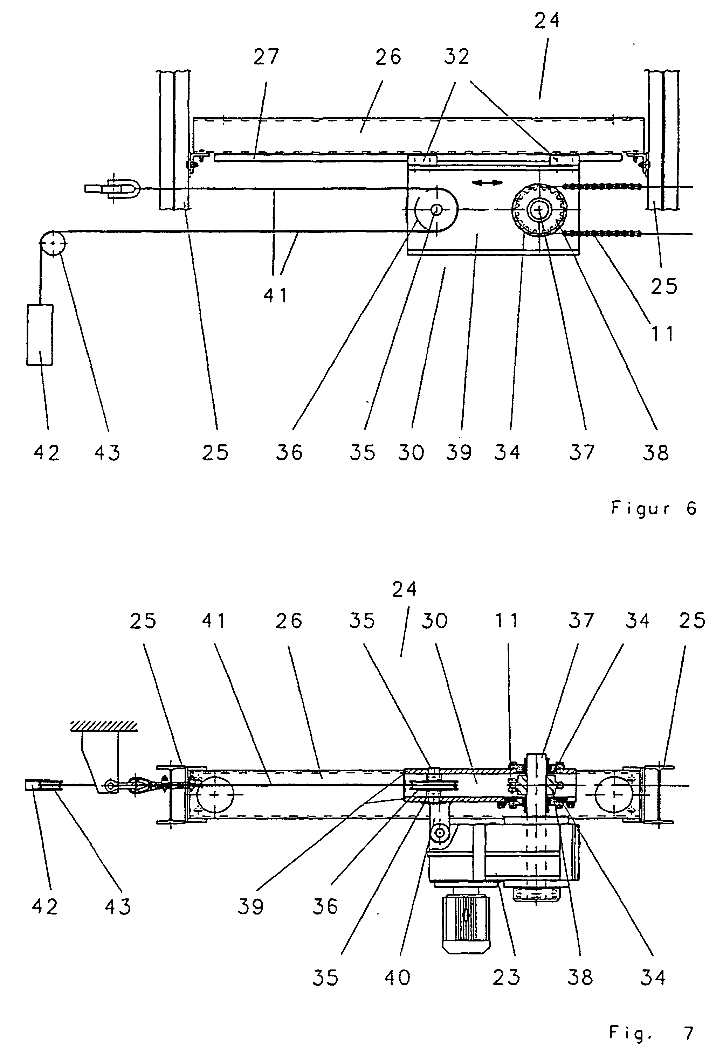

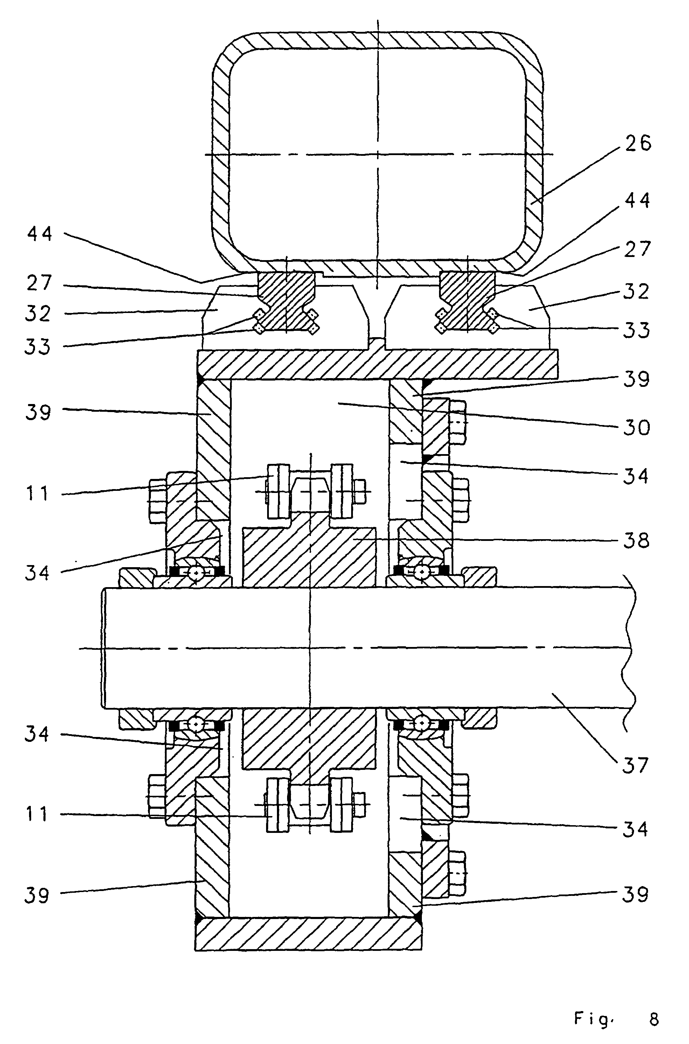

In den Figuren 6 bis 8 ist das Gestell 14 dargestellt. Das Gestell 14 ist in Transportrichtung gesehen vor dem Trockner 1 angeordnet und dient der Aufnahme der zweiten Antriebe 23 kombiniert mit den Spannvorrichtungen 24 für die Ketten 11. Das Gestell 14 befindet sich auf der Antriebsseite seitlich neben dem Ende der Zuführvorrichtung.

Parallel zur Transportrichtung sind beabstandet zwei Stützen 25 angeordnet, die in einem Fundament verankerbar sind. Zwischen den Stützen 25 erstrecken sich Träger 26. Die Anzahl der Träger 26 entspricht der Anzahl der Ketten 11 eines Trockners.

Ein Träger 26 besteht z.B. aus einem Kastenprofil und ist an beiden Stützen 25 befestigt, z.B. mittels Winkelprofilen und Schrauben. An der Unterseite eines Trägers 26 sind zwei plane Führungsflächen 44 angeordnet, auf denen jeweils eine Schiene 27 befestigt ist. Beide Schienen 27 erstrecken sich über annähernd die Länge des Trägers 26 und sind zueinander parallel.

Die Schienen 27 und ein zugehöriges Führungselement 32 stammen aus einem handelsüblichen System für Rollenumlaufeinheiten. Jedes System ist in der Lage, Kräfte mit Ausnahme in Richtung der Schienenlängsachse und Drehmomente um jede beliebige Achse aufzunehmen. Die Ausdrücke Schienenkopf bzw. -fuß sind unabhängig von der Lage der Schiene als Funktion (Führung bzw. Auflage) zu sehen.

Das Profil einer Schiene 27 besteht im wesentlichen aus einem Rechteck mit je zwei aufgesetzten Flächen auf den beiden längeren Seiten und ist zur vertikalen Achse spiegelsymmetrisch. Eine aufgesetzte Fläche im Bereich des Schienenkopfes 29 hat die Form eines gleichschenkligen Dreiecks, wobei seine Basis am Rechteck liegt und mit diesem eine gemeinsame Ecke bildet. Die Flächen, die durch die Schenkel dieses Dreiecks gebildet werden, sind die Führungsflächen, auf denen sich die Führungselemente 32 abstützen. Die zweite aufgesetzte Fläche im Bereich des Schienenfußes 28 hat die Form eines Trapezes, wobei eine der nicht parallelen Seiten in einer Linie mit der entsprechenden Seite des Rechtecks ist und die Auflagefläche der Schiene 27 auf der Führungsfläche 44 bildet.

Unterhalb des Trägers 26 ist ein kastenartiger Schlitten 30 angeordnet, wobei der Schlitten 30 auf den Schienen 27 verschiebbar geführt ist. Der Schlitten 30 ist z.B. eine stabile Schweißkonstruktion aus vier dicken Blechen, wobei das obere, den Dekkel 31 bildende Blech über ein oder beide Seitenteile hinausragen kann. Dies ist besonders dann sinnvoll, wenn der Schlitten 30 schmal gebaut ist. So erhält man einerseits einen günstigen Kraftverlauf und schafft andererseits Platz für die Führungselemente 32. Eine schmale Bauweise des Schlittens 30 wiederum ist für eine insgesamt kompakte Bauweise von Bedeutung.

Auf dem Deckel 31 sind vier Führungselemente 32 befestigt, wobei je zwei auf einer gemeinsamen Längsachse angeordnet sind. Ein Führungselement 32 hat einen im wesentlichen rechteckigen Grundriß und Querschnitt. Die Grundfläche, die in Kontakt mit dem Deckel 31 ist, ist eben. Gegenüber der Grundfläche ist mittig im Querschnitt des Führungselementes 32 eine Aussparung, die mit geringem Spiel genau dem Querschnitt der Schiene 27, jedoch ohne einen Teil des Schienenfußes 28 entspricht.

In den Flächen, die im Führungselement 32 den Führungsflächen der Schiene 27 gegenüber liegen, sind jeweils mindestens zwei Rollen 33 eingelassen, die um ihre Längsachse drehbar sind. Die Rollen 33 ragen etwas aus den Flächen heraus, stützen sich praktisch ohne Spiel auf den Führungsflächen des Schienenkopfes 29 ab und bilden so eine leicht verschiebbare Lagerung zwischen Führungselement 30 und Schiene 27.

In den Seitenblechen 39 des Schlittens 30 sind jeweils zwei runde Aussparungen 34, 35, wobei eine Aussparung 34, 35 in einem Seitenblech 39 der im zweiten Seitenblech 39 genau gegenüberliegt. In der dem Trockner 1 abgewandten Aussparung 35 ist eine Umlenkrolle 36 drehbar gelagert. In der zweiten Aussparung 34 ist eine Antriebswelle 37 drehbar gelagert. Auf der Antriebswelle 37 ist ein Kettenrad 38 so befestigt, daß es mit den Kettenrädern 10 der Rollen 8 vertikal fluchtet. Um das Kettenrad 38 ist die Kette 11 kommend vom und gehend zum Trockner 1 geführt. Außen mündet die Antriebswelle 37 antreibbar im Getriebe eines Antriebs 23. Dieser ist an seinem Ende gegenüber der Antriebswelle 37 an einer Drehmomentenstütze 40, die außen am Schlitten 30 angeordnet ist, befestigt.

Es sind verschiedene Systeme als Spannvorrichtung einsetzbar wie z.B. druckbeaufschlagte Zylinder oder drehbare Spindeln. Im folgenden ist ein System beschrieben, das mit Schwerkraft arbeitet.

Um die Umlenkrolle 36 ist ein Seil 41 geführt. Ein Ende des Seils 41 ist z.B. an der vom Trockner 1 abgewandten Stütze 25 fixiert, während am anderen Ende des Seils 41 ein Gewicht 42 befestigt ist. Das Seil 41 ist von der Stütze 25 über dieUmlenkrolle 36 und eine weitere Umlenkrolle 43 so geführt, daß das Ende mit dem Gewicht 42 frei hängt. Die Größe des Gewichtes 42 ist so gewählt, daß die erforderliche Kettenspannung gewährieistet ist.

Im Betrieb sind Rollen 8 über die Antriebe 15, 23 und die Kette 11 angetrieben. Hierdurch werden die Platten durch den Trockner 1 gefördert. Die Antriebe 15, 23 haben alle dieselbe Nennleistung und sind mit derselben Drehzahl angetrieben, so daß für jede Kette 11 ein Antrieb 15, 23 jeweils die Hälfte der insgesamt erforderlichen Antriebsleistung erbringt. Hierdurch ist die Zugspannung in der Kette 11 entsprechend reduziert. Spannungsunterschiede in der Kette 11 z.B. durch Längenänderung infolge Wärmedehnung werden durch die Spannvorrichtung 24 vermieden, indem der Schlitten 30 entsprechend über die Schienen 27 fährt und durch das Gewicht 42 die Spannung in der Kette 11 weitgehend konstant hält.

## Patentansprüche

1. Trockner zum Trocknen von durchlaufenden Platten,
mit einer Eintrag- und einer Austragseite
mit Vorrichtungen zum Aufblasen von Trocknungsmedium,
mit in Etagen angeordneten Fördervorrichtungen, wobei jede Fördervorrichtung als Rollenbahn ausgebildet ist,
mit einem Antriebssystem bestehend aus einer Vielzahl endloser Ketten (11), und jeder Kette (11) zugeordnet mindestens einem Antrieb (15, 23) und einer Spannvorrichtung (24),
**dadurch gekennzeichnet, daß** an jeder Kette (11) zwei Antriebe (15, 23) angreifen, von denen der eine (15) auf der Austragseite und der andere (23) auf der Eintragseite angeordnet ist.

2. Trockner nach Anspruch 1, **dadurch gekennzeichnet, daß** mit einer Kette (11) jeweils zwei Fördervorrichtungen antreibbar sind.

3. Trockner nach Anspruch 1 und 2, **dadurch gekennzeichnet, daß** jeweils die Spannvorrichtung (24) am einlaufseitigen Ende des Trockners (1) angeordnet ist.

4. Trockner nach Anspruch 1 bis 3, **dadurch gekennzeichnet, daß** jeweils die Spannvorrichtung (24) und ein Antrieb (23) in einem gemeinsamen Schlitten (30) angeordnet sind.

5. Trockner nach Anspruch 1 bis 4, **dadurch gekennzeichnet, daß** jeweils die Spannvorrichtung (24) in mindestens einer Rollenumlaufeinheit gelagert ist.

6. Trockner nach Anspruch 5, **dadurch gekennzeichnet, daß** jeweils die Spannvorrichtung (24) in zwei Rollenumlaufeinheiten gelagert ist.

7. Trockner nach Anspruch 1 bis 6, **dadurch gekennzeichnet, daß** jeweils die Spannvorrichtung (24) hängend gelagert ist.

## Claims

1. A dryer for drying boards passing through the dryer, comprising
an infeed end and a delivery end,
devices for blowing in a drying medium,
conveying devices arranged in levels, each conveying device being formed as a roller conveyor,
a drive system comprising a plurality of endless chains (11) and, associated with each chain, at least one drive (15, 23) and a tensioning device (24),
**characterised in that** two drives (15, 23) engage each chain (11), one (15) of which is arranged at the delivery end and the other (23) at the infeed end.

2. A dryer according to claim 1, **characterised in that** two conveying devices are drivable by one chain (11).

3. A dryer according to claims 1 and 2, **characterised in that** each tensioning device (24) is arranged at the infeed end of the dryer (1).

4. A dryer according to claims 1 to 3, **characterised in that** each tensioning device (24) and a drive (23) are arranged in a common carriage (30).

5. A dryer according to claims 1 to 4, **characterised in that** each tensioning device (24) is mounted in at least one roller guidance unit.

6. A dryer according to claim 5, **characterised in that** each tensioning device (24) is mounted in two roller guidance units.

7. A dryer according to claims 1 to 6, **characterised in that** each tensioning device (24) is mounted so as to be suspended.

## Revendications

1. Séchoir pour sécher des plaques passant en continu,
avec un côté d'entrée et un côté de sortie,
avec des dispositifs pour souffler un milieu de séchage,
avec des dispositifs de transport disposés de manière étagée, chaque dispositif de transport étant conformé comme un transporteur à rouleaux,
avec un système d'entraînement constitué d'une pluralité de chaînes (11) sans fin, et au moins un entraînement (15, 23) et un dispositif de tension (24) associés à chaque chaîne (11),
**caractérisé en ce que** deux entraînements (15, 23) agissent sur chaque chaîne (11), entraînements dont l'un (15) est disposé du côté de la sortie et l'autre (23) du côté de l'entrée.

2. Séchoir selon la revendication 1, **caractérisé en ce que** deux dispositifs de transport peuvent être entraînés chaque fois par une chaîne (11).

3. Séchoir selon la revendication 1 et 2, **caractérisé en ce que** le dispositif de tension (24) est disposé chaque fois à l'extrémité du séchoir (1) du côté de l'entrée.

4. Séchoir selon les revendications 1 à 3, **caractérisé en ce que** le dispositif de tension (24) et un entraînement (23) sont disposés chaque fois dans un chariot (30) commun.

5. Séchoir selon les revendications 1 à 3, **caractérisé en ce que** le dispositif de tension (24) est placé chaque fois dans au moins une unité de circulation à rouleaux.

6. Séchoir selon la revendication 5, **caractérisé en ce que** le dispositif de tension (24) est placé chaque fois dans deux unités de circulation à rouleaux.

7. Séchoir selon les revendications 1 à 3, **caractérisé en ce que** le dispositif de tension (24) est placé chaque fois de manière suspendue.
